# EUROPEAN PATENT APPLICATION

(11) **EP 4 064 693 A1**
(43) Date of publication of application: **28.09.2022**
(21) Application number: 21315048.5
(22) Date of filing: 22.03.2021
(51) Int. Cl.: H04N 7/15

(54) **VIDEOCONFERENCING**

(71) Applicant: Hegner, Benedikt Christopher, 74140 Veigy-Foncenex (FR); Velarde Lazarte, Monica Rocio, 74140 Veigy-Foncenex (FR)
(72) Inventor: Hegner, Benedikt Christopher, 74140 Veigy-Foncenex (FR); Velarde Lazarte, Monica Rocio, 74140 Veigy-Foncenex (FR)
(74) Representative: Elkington and Fife LLP

(57) **Abstract**

Computer-implemented methods for conducting a videoconference are provided. Participants are associated with terminal devices. A spatial layout is defined, comprising a set of spatial positions. Video streams of each participant may be displayed in respective spatial positions. In one aspect, a group of participants may be defined for a first participant, based on the distances of other participants from the first participant, according to the spatial positions in the spatial layout. Local communication may be enabled between the first participant and the group of participants. In another aspect, a participant may select an unassigned spatial position in the spatial layout. The participant may select different unassigned spatial positions at different times during a videoconference.

## Description

### FIELD OF THE INVENTION

This invention relates to methods and systems for videoconferencing. In particular, it relates to videoconferencing for groups of three, four, or more participants.

### BACKGROUND OF THE INVENTION

Various videoconferencing systems are known in the art. In a typical system of the prior art, participants are displayed on each other's screens in a pattern of rectangular tiles. The tiles may be rearranged by the system in various instances - for example, when a participant joins or leaves the videoconference. This may include reordering and re-arranging the tiles.

### SUMMARY OF THE INVENTION

Although they enable visual and audio communication between participants in diverse geographical locations, conventional videoconferencing systems are prone to losing many of the benefits of real-world interaction. It would be desirable to emulate these real-world interactions in a videoconferencing setting, in order to enhance the user-experience and enable more effective communication between participants. At the same time, it would be desirable to make best use of the possibilities that are offered by a videoconference but are not available in real-world meetings.

The invention is defined by the claims.

Computer-implemented methods for conducting a videoconference are provided. Participants are associated with terminal devices. A spatial layout is defined, comprising a set of spatial positions. Video streams of each participant may be displayed in respective spatial positions. In one aspect, a group of participants may be defined for a first participant, based on the distances of other participants from the first participant, according to the spatial positions in the spatial layout. Local communication may be enabled between the first participant and the group of participants. In another aspect, a participant may select an unassigned spatial position in the spatial layout. The participant may select different unassigned spatial positions at different times during a videoconference.

According to one aspect, there is provided a computer-implemented method for conducting a videoconference among a plurality of participants, each participant being associated with a respective terminal device, the method comprising:
obtaining a spatial layout definition, defining a set of spatial positions;
obtaining an allocation definition, defining an assignment of each participant to a respective spatial position;
determining, for a first participant in the plurality of participants, a first group of neighbouring participants, based on distances between the first participant and other participants, wherein the distances are defined with reference to the spatial positions to which the participants are assigned;
receiving a first media stream from a first terminal device associated with the first participant;
receiving, from the first terminal device, a request to initiate local communication;
   and
communicating the first media stream to the terminal devices associated with the participants in the first group.

This method may be a method for a server computer in a videoconferencing architecture.

Determining the first group may comprise identifying a predetermined number of participants having the shortest distances to the first participant, in the spatial layout. For example, the first group may comprise the two, three, four, five (etc.) participants nearest to the first participant. Alternatively, determining the first group may comprise identifying those participants who are less than a predetermined distance from the first participant. In both cases, neighbours are determined based on the proximity of their respective spatial positions.

Embodiments of the present method can enable location-dependent communication between subgroups of participants in the videoconference. This goes beyond simply selecting a discussion, or breakout group that a participant wishes to be part of, but actually choosing a "seat" in a defined layout, and having selective interaction with neighbours based on proximity.

The spatial layout is common to all participants - that is, the same spatial layout applies to all participants. When participants view the spatial layout, the same spatial layout is displayed to each of them. The spatial layout may be fixed, to the extent that individual participants cannot alter it. In some examples, it may be fixed for the duration of the videoconference. In other examples it may be changed during the videoconference. However, when changed, the change applies to all participants.

In some embodiments, the number of spatial positions may be greater than the number of participants. This can encourage participants to move between different spatial positions in the layout - again replicating some of the possibilities of meeting in a real-world space.

The distances may be determined using a distance metric defined on the spatial layout. The distance metric may comprise a one-dimensional, two-dimensional, or three-dimensional distance.

In some embodiments, the step of communicating the first media stream to the terminal devices associated with the participants in the first group may be performed in response to receiving the request to initiate local communication. The first media stream may be communicated only to the terminal devices associated with the participants in the first group, and not to other terminal devices. With this approach, the "filtering" of local communication may be performed at the server. The server communicates (for example, forwards) the first media stream only to the first group.

In other embodiments, the server may communicate the first media stream to all terminal devices (not only the terminal device in the first group). The server may further communicate a definition of the first group to all terminal devices. It is then left to the individual terminal devices to "filter" the local communication. For example, a terminal device, upon receiving the first media stream and the definition of the first group, may determine whether it is a member of the first group or not. If it is a member of the first group, it would present the first media stream to its associated participant. On the other hand, if it is not a member of the first group, it would not present the first media stream to the participant.

The method may further comprise determining, for a second participant in the plurality of participants, a second group of neighbouring participants, based on the distances between the second participant and other participants; receiving a second media stream from a second terminal device associated with the second participant; receiving, from the second terminal device, a request to initiate local communication; and communicating the first media stream to the terminal devices associated with the participants in the second group, wherein the first group and the second group overlap but are not identical. Here "overlap" between groups means that the two groups have one or more participants in common.

The method may further comprise, communicating the spatial layout definition and the allocation definition to each terminal device.

The method may further comprise controlling each terminal device to display video streams of the other participants on screen at spatial positions determined by the spatial layout definition.

The method may comprise controlling each terminal device to display video streams of all participants on screen at spatial positions determined by the spatial layout definition. In other words, not only is a participant presented with the video streams of the other participants, positioned in their respective spatial positions, but the participant is also presented with their own video stream, positioned in their own spatial position.

The display may be controlled by a server computer at least in the sense that the server computer communicates the spatial layout definition and the allocation definition to each terminal device, for use by the terminal device to display the video streams according to these definitions.

In some embodiments, the method may further comprise: receiving from each terminal device a video stream; and forwarding the video stream received from each terminal to every other terminal. These steps may be performed by a selective forwarding unit (SFU), in a selective forwarding architecture.

In some embodiments, the method may further comprise: receiving a video stream from each terminal device; compositing the received video streams into a combined video stream; and transmitting the combined video stream to each terminal device. These steps may be performed by a multipoint conferencing unit (MCU) in an MCU architecture.

The method may further comprise: receiving, from the first terminal device, a request to initiate global communication; and in response, communicating the first media stream to all of the other terminal devices.

In some embodiments, communicating the first media stream to the terminal devices associated with the participants in the first group may comprise forwarding the first media stream to those terminal devices. This forwarding may be done without decoding the first media stream, such that the first media stream is only decoded by the terminal devices themselves. The method may further comprise: receiving from one or more terminal devices one or more respective media streams for global communication; decoding the one or more media streams; combining the decoded one or more media streams into a composite media stream for global communication; and communicating the composite media stream to all of the terminal devices.

This represents a hybrid of the MCU and SFU architectures. Streams for global communication are combined or mixed together using a multipoint conferencing approach, while streams for local communication are selectively forwarded.

The first media stream and/or the second media stream may comprise any one or any combination of two or more of: an audio stream; a video stream; a text stream; a voice note or other audio clip; a file or document, in particular a media file; a visual notification; and an audio notification.

The text stream may comprise text messages typed into a "chat" interface of the videoconferencing system. The visual notification may comprise an emoticon, graphic, drawing, animation (for example, GIF) or photograph. The audio notification may comprise a sound effect, such as a bell, buzzer, tone or the like.

The method may comprise mixing the first and/or second media stream (used for a local communication) with one or more other media streams, used for global communication. For example, when the first media stream (and/or second media stream) comprises an audio stream, the method may comprise mixing the first media stream (and/or second media stream) with a global audio stream. The global audio stream may be an audio stream that is communicated to all participants. In this way, groups of neighbouring participants can hear local audio communication, within the group, as well as global audio communication between all of the participants. The same applies to other forms of media stream. For example, a video stream for local communication may be displayed to participants in a given group alongside a video stream (or streams) for global communication, which is (or are) displayed to all participants.

The method may further comprise processing the first and/or second media stream (used for a local communication) in a manner that is dependent on the distance between the sending participant and the receiving participant. For example, an audio stream for local communication may be processed such that it is presented at a volume that is dependent on a magnitude of the distance between the sending participant and the receiving participant. The volume may be set in inverse relation to the magnitude of the distance, for example. Thus, relatively distant participants will appear quieter and relatively nearby participants will appear louder. Alternatively or in addition, an audio stream for local communication may be processed such that it is presented in stereo in a manner that is dependent on a direction from the sending participant to the receiving participant, in the spatial layout. In this way, for example, if the speaking (sending) participant is to the left of the listening (receiving) participant, in the spatial layout, then audio stream may be processed such that the left channel of the audio stream is played back louder than the right channel. Similarly, the processing may introduce a phase difference between the left and right audio channels, to further enhance the perception of an apparent direction of arrival. These techniques may help to give the participants an intuitive sense of distance and direction in the spatial layout, further helping to enhance the realism of the videoconference experience. The necessary processing may be done either at the server or at the terminal device.

The method may further comprise: receiving, from a third terminal device, a request for a third participant associated with the third terminal device to occupy one of the spatial positions; and updating the allocation definition to assign the third participant to the requested spatial position.

This may include first checking whether the requested position is occupied or unoccupied. The third participant may be the same participant as either the first or the second participant, or may be a different participant.

The method may further comprise: determining that the third participant is to be added to the first group, based on the distance between the first participant and the third participant; and notifying at least the first participant that the third participant is to be added to the first group.

That is, the first participant is notified that the third participant has become their neighbour. Again, the distances defined with reference to the assigned spatial positions in the spatial layout.

Also provided is a computer-implemented method for conducting a videoconference among a plurality of participants, each participant being associated with a respective terminal device, the method comprising:
obtaining a spatial layout definition, defining a set of spatial positions;
obtaining an allocation definition, defining an assignment of several of the participants to respective spatial positions;
displaying on a display screen a map of the spatial layout, indicating spatial positions that are already assigned and spatial positions that are unassigned;
receiving user input selecting one of the unassigned spatial positions; and
communicating the selected spatial position to a server computer.

This method may be a method for a client computer or terminal device, in a videoconferencing architecture. This method and the method summarised above for the server computer may be combined to provide a videoconferencing system. It should be understood that, in general, any embodiment of the client method may be combined with any embodiment of the server method.

The method may further comprise: receiving a definition of a group of neighbouring participants; transmitting to the server computer a request to initiate local communication with the group; and transmitting a media stream to the server computer, for delivery to the group.

The method may further comprise: receiving a video stream of each participant; and displaying the video streams on the display screen, wherein each participant's video stream is displayed at their respective assigned spatial position.

The video streams may be received as individual, separate streams. Alternatively, they may be received in the form of a single combined stream.

The method may further comprise receiving a media stream for local communication, and presenting this media stream simultaneously with the video streams of each participant. The media stream for local communication may comprise an audio stream. The method may further comprise receiving an audio stream for global communication. The method may comprise mixing the audio stream for local communication with the audio stream for global communication, and presenting (in particular, playing) it simultaneously with the video streams.

Each participant's video stream may be displayed in a circular or approximately circular shape.

The shortest distance between each shape and its nearest neighbouring shape may be less than 10% of the largest linear dimension of the shape (and optionally less than 10% of the largest linear dimension of the nearest neighbouring shape). Optionally, the shortest distance is less than 5%, less than 2%, or less than 1% of either of these dimensions. The shortest distance may be greater than zero. In particular, it may be at least 0.1%, or at least 0.5% of either of the two mentioned linear dimensions. The approximately circular shapes may be polygons having six or more sides. In some embodiments, the polygons may be displayed in a tiled arrangement. There may be no unused space or substantially no unused space between tiles.

The spatial positions may be arranged in one of: a spiral arrangement; and an arrangement of concentric-rings.

The distance metric may be defined in one dimension, along the spiral, or in two dimensions, both along the spiral and between adjacent layers of the spiral. Similarly, the distance metric may be defined in one dimension along each concentric ring, or in two dimensions, incorporating both radial and tangential components. The concentric rings may be circular rings.

Spirals and concentric rings can offer particularly advantageous arrangements in the context of videoconferencing. They can allow more efficient packing of video streams into the spatial arrangement - in particular, if the video streams are displayed with a circular or approximately circular shape. Spirals and concentric rings may be less practical in some real, physical seating arrangements, because of the difficulty of accessing individual seats. However, such constraints do not apply to the virtual seating arrangements according to embodiments of the present invention.

The spatial positions may be arranged in a spiral arrangement, the method may further comprise: adding an additional spatial position at the end of the spiral when a new participant joins videoconference; and/or removing a spatial position from the end of the spiral when a participant leaves the videoconference.

The flexibility to add and remove individual spatial positions is a particular benefit of a spiral arrangement. With other arrangements, for example, it may be necessary to add an entire new row of spatial positions when a single new participant joins. This may contribute to a less efficient use of screen space, depending on the number of participants. Further, the spiral arrangement can allow the addition and/or removal of spatial positions with no disruption (or very little disruption) of the remaining spatial positions. This may facilitate improved coding efficiency - in particular, if the video streams are transmitted as a single combined stream. It can also reduce visual disturbance for the other participants, when a participant joins or leaves the videoconference.

According to another aspect, there is provided a computer-implemented method for a first terminal device, for conducting a videoconference among a plurality of participants, each participant being associated with a respective terminal device, the method comprising:
obtaining a spatial layout definition, defining a set of spatial positions;
obtaining an allocation definition, defining an assignment of several of the participants to respective spatial positions;
obtaining a group definition, defining a group of neighbouring terminal devices of the first terminal device, based on distances between the first terminal device and the other terminal devices, wherein the distances are defined with reference to the spatial positions to which the participants are assigned;
receiving a media stream for local communication, the media stream originating from a second terminal device;
determining whether the second terminal device is a member of the group of neighbouring terminal devices; and

if so, presenting the media stream at the first terminal device.

Also provided is a computer program comprising computer program code configured to cause one or more physical computing devices to carry out a method as summarized above when the computer program is run on the one or more physical computing devices. The computer program may be stored on a computer readable medium, optionally a non-transitory computer readable medium.

### BRIEF DESCRIPTION OF THE DRAWINGS

The invention will now be described by way of example with reference to the accompanying drawings, in which:
Fig. 1 is a block diagram of a computer system, which may be used in a method of conducting a videoconference, according to an example;
Fig. 2 illustrates four computer systems, connected via the Internet, according to an example;
Fig. 3A shows a spatial layout with spatial positions arranged in a spiral;
Fig. 3B shows a spatial layout with spatial positions arranged in concentric circles;
Figs. 4A and 4B are flowcharts illustrating a method for conducting a videoconference, according to an example;
Fig. 5 is a flowchart showing further features of the method, according to an example;
Fig. 6 is a flowchart showing further features of the method, according to an example;
Fig. 7 is a flowchart showing further features of the method, according to an example; and
Fig. 8 is a flowchart showing further features of the method, according to an example.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

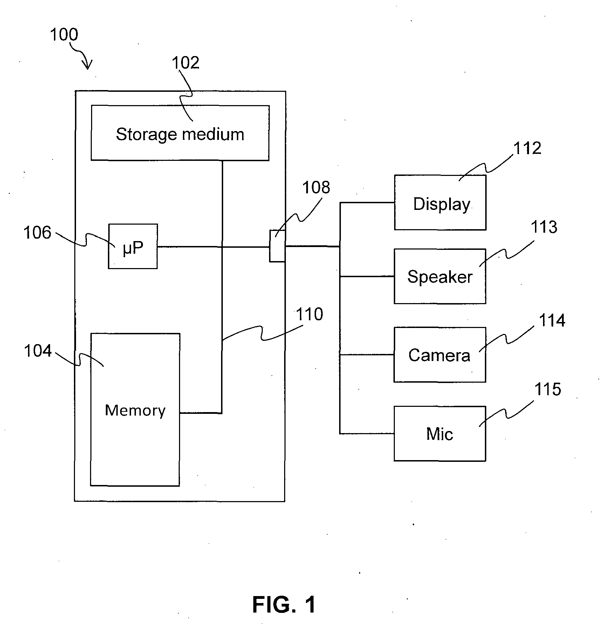

Fig. 1 of the accompanying drawings schematically illustrates an exemplary computer system 100 upon which embodiments of the present invention may run. The exemplary computer system 100 comprises a computer-readable storage medium 102, a memory 104, a processor 106 and one or more interfaces 108, which are all linked together over one or more communication busses 110. The exemplary computer system 100 may take the form of a conventional computer system, such as, for example, a desktop computer, a personal computer, a laptop, a tablet, mobile device such as a smart phone, a virtual reality headset, a server, a mainframe computer, and so on.

The computer-readable storage medium 102 and/or the memory 104 may store one or more computer programs (or software or code) and/or data. The computer programs stored in the computer-readable storage medium 102 may include an operating system for the processor 106 to execute in order for the computer system 100 to function. The computer programs stored in the computer-readable storage medium 102 and/or the memory 104 may include computer programs according to embodiments of the invention or computer programs that, when executed by the processor 106, cause the processor 106 to carry out a method according to an embodiment of the invention

The processor 106 may be any data processing unit suitable for executing one or more computer readable program instructions, such as those belonging to computer programs stored in the computer-readable storage medium 102 and/or the memory 104. As part of the execution of one or more computer-readable program instructions, the processor 106 may store data to and/or read data from the computer-readable storage medium 102 and/or the memory 104. The processor 106 may comprise a single data processing unit or multiple data processing units operating in parallel or in cooperation with each other. The processor 106 may, as part of the execution of one or more computer readable program instructions, store data to and/or read data from the computer-readable storage medium 102 and/or the memory 104.

The one. or more interfaces 108 may comprise a network interface enabling the computer system 100 to communicate with other computer systems across a network (not shown in Fig. 1). The network may be any kind of network suitable for transmitting or communicating data from one computer system to another. For example, the network could comprise one or more of a local area network, a wide area network, a metropolitan area network, the internet, a wireless communications network, and so on. The computer system 100 may communicate with other computer systems over the network via any suitable communication mechanism/protocol. The processor 106 may communicate with the network interface via the one or more communication busses 110 to cause the network interface to send data and/or commands to another computer system over the network. Similarly, the one or more communication busses 110 enable the processor 106 to operate on data and/or commands received by the computer system 100 via the network interface from other computer systems over the network.

The interface 108 may additionally comprise a user input interface and/or a user output interface. The user input interface may be arranged to receive input from a user, or operator, of the system 100. The user may provide this input via one or more user input devices, such as a mouse (or other pointing device, track-ball or keyboard. In the context of videoconferencing, the input devices include a camera 114 and preferably also a microphone 115. The user output interface may be arranged to provide a graphical/visual output to a user or operator of the system 100 on a display (or monitor or screen) 112. The processor 106 may instruct the user output interface to form an image/video signal which causes the display to show a desired graphical output. The display may be touch-sensitive enabling the user to provide an input by touching or pressing the display. In the context of videoconferencing, the output devices preferably also include a loudspeaker 113 or headphones, for playing audio output.

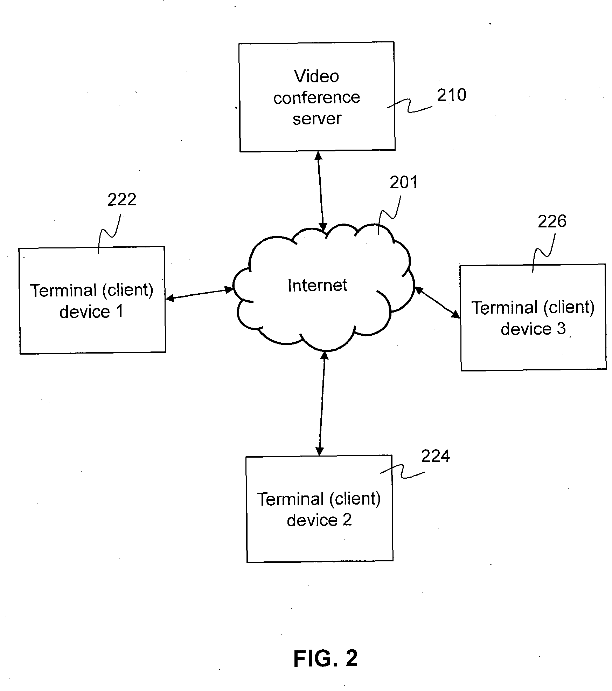

Fig. 2 shows an arrangement of computer systems for conducting a videoconference, according to an example. Fig. 2 shows a videoconference server 210, connected to the internet 201. Three videoconference client / terminal devices are also shown. These comprise: a first terminal device 222; a second terminal device 224; and a third terminal device 226. The server 210 is configured to communicate with the terminal devices over the internet 201. The server 210 and the terminal devices 222, 224, 226 may each comprise a computer system 100 as illustrated in Fig. 1. However, it should be understood that the videoconference server 210 typically does not need to incorporate the output devices (display 112 and loudspeaker 13) or the input devices (camera 114 and microphone 115). This is because, in most instances, the videoconference server 210 is not associated with a participant in the videoconference. Each of the terminal devices is associated with a videoconference participant. The input devices of each terminal device include the camera 114 and microphone 115. Similarly, the output devices of each terminal device include the display 112 and loudspeaker 113. Each of the terminal devices 222, 224, 226 is connected to the internet 201 and each is configured to communicate with the server 210 over the internet 201.

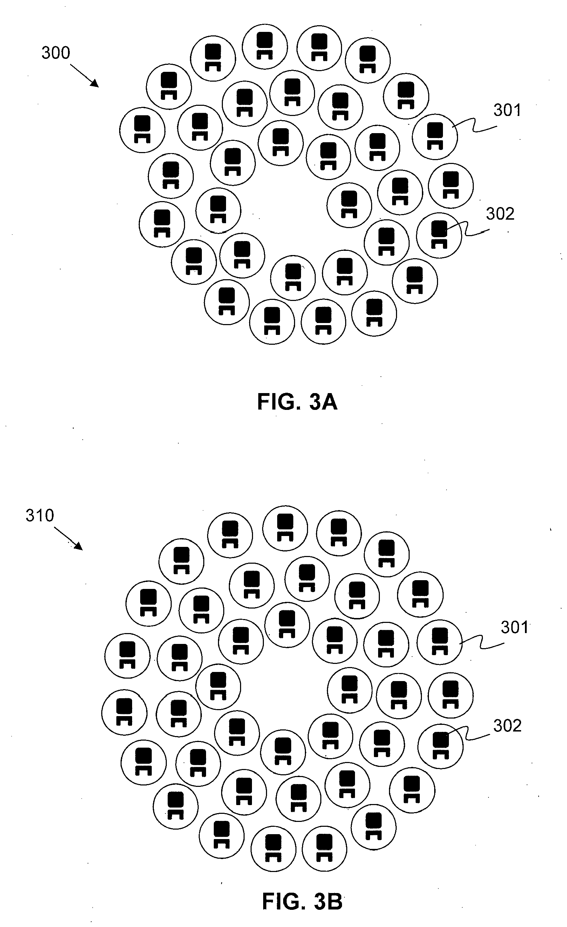

Figs. 3A and 3B shows exemplary spatial layouts that may be used in a videoconference according to an example. The spatial layout defines a set of spatial positions. Each spatial position can be associated with a given participant in the videoconference. Once a participant is associated with a particular spatial position in the layout, the video stream of that participant will be displayed at that spatial position. That is, the video stream of that participant will be displayed to all of the other participants in the same spatial position. Additionally, the participant's own video stream is displayed to the participant themselves at the same spatial position.

The spatial layout is fixed for all participants in the videoconference. The spatial layout may be selected by a host of the videoconference (meaning the participant who convened it). Alternatively, the spatial layout may be selected by one or more other participants, or may be selected at random. Customised spatial layouts may be designed by the host or other users. The definition of a spatial layout may be saved in the videoconference system, so that the spatial layout can be reused in a subsequent videoconference. Similarly, the spatial position assigned to a given participant (or to each participant) may be saved, so that this too may be reused in a subsequent videoconference, or so that one or more participants who leave the videoconference may re-join it in the same spatial positions that they were in when they left.

In Fig. 3A, the spatial layout 300 comprises a spiral arrangement of spatial positions. Each spatial position is associated with a predetermined shape 301 (in this example, a circle). An icon 302 is displayed inside each shape. As shown, in this example, the icons depict empty chairs. Fig. 3A thus represents a map of the spatial layout. This is the view that participants would see upon joining the videoconference, before any of the participants has selected a spatial position in the spatial layout 300. As each participant selects their desired position in the spatial layout 300, the videoconferencing system displays their respective video stream in the respective position. In other words, the empty-chair icon at each spatial position is replaced by a participant's video stream, when the participant selects to "sit" in the previously unoccupied position. In this way, the display shown in Fig. 3A serves both as a map of the spatial layout and, simultaneously, as a view of the videoconference. Other views may be available - for example, a conventional "speaker" view, in which the participant who is currently speaking occupies the entirety of the screen, or an augmented speaker view, in which the current speaker is shown in an enlarged view, together with (for example, alongside) the spatial layout. A participant may be able to choose between different views by making appropriate selections in a user interface of the videoconferencing software.

It should be understood that - although desirable - it is not essential that participants be able to select their own spatial positions within the spatial layout. In some instances, participants may be assigned to particular spatial positions, rather than being allowed to select their own spatial position. For example, a host of the videoconference may pre-assign (before the videoconference) or assign (during the videoconference) spatial positions to some or all of the participants. Alternatively, the videoconference server 210 may assign the spatial positions - for example, at random, or based on some systematic rule.

The use of a spatial layout that is static and common to all participants in the videoconference is advantageous for a number of reasons. It may be easier for each participant to find, recognise, and/or remember each of the other participants, based on their static positions in the spatial layout. It may be easier to define a consistent sequence for ordering the participants. For example, when each participant needs to speak in turn (to introduce themselves, or to express an opinion, vote, or answer a question, etc.) it is possible to define an ordering based on the spatial layout that will be understood consistently by all the participants.

Relative spatial visual interactions also become possible. For example, if a participant turns to their left, it will appear on their screen, and on the screens of all other participants, that they have turned to the participant occupying the spatial position to the left of theirs, in the spatial layout. There is also the possibility for mutual visual interaction. Two participants who are shown adjacent to one another in the spatial layout can perform a virtual "high five" by coordinating their hand movements with one another while looking at the screen. All of these interactions make for a richer user experience.

The spiral arrangement shown in the spatial layout 300 of Fig. 3A can offer particular benefits. It is easily scalable as participants join or leave the videoconference - individual spatial positions can be added or removed from the outer end of the spiral to accommodate joining or leaving participants. This can allow participants to come and go with minimal impact on the spatial layout, in terms of the positioning of the other participants. The combination of circular (or approximately circular) shapes 301 together with a spiral arrangement can also enable an efficient use of screen space, by allowing close packing of the participants' video streams in their respective spatial positions.

Fig. 3B shows another exemplary spatial layout 310. This layout comprises an arrangement of concentric rings (in particular, circles) of spatial positions. Like the spiral arrangement, the combination of video streams displayed in circular shapes 301 together with the concentric circular arrangement can facilitate efficient use of screen space through dense packing of the spatial positions (and thus video streams).

It should be understood that shapes other than the circles 301 may be used to achieve suitably dense packing. Similar benefits may be achieved using polygons (in particular, regular polygons) having six or more sides. For example, hexagonal shapes can be packed in a honeycomb arrangement on the screen.

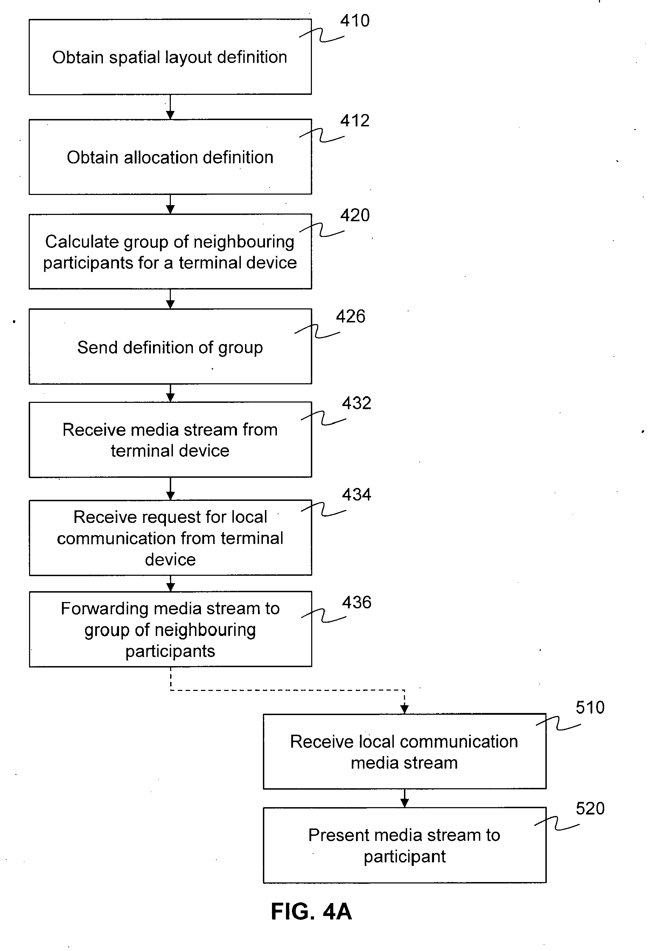

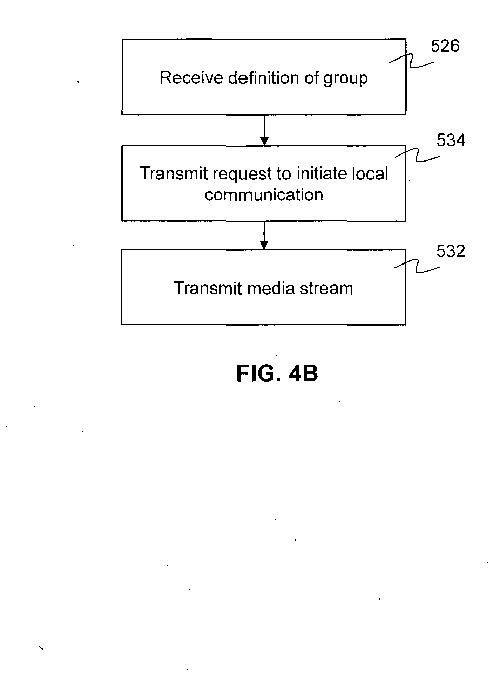

Figs. 4A and 4B are flowcharts illustrating a method for conducting a videoconference, according to an example. Steps aligned to the left hand side are those carried out by the server 210. Steps aligned to the right hand side are those carried out by one or more of the terminal devices 222, 224, 226.

In step 410, the processor 106 of the server 210 obtains a spatial layout definition defining a set of spatial positions. The spatial layout may be a layout like one of those shown in Figs. 3A and 3B, or some other layout. The layout may be selected by a host of the videoconference from a predefined set of possible layouts. In this case, the processor may retrieve the definition of the spatial layout from the storage medium 102 and load it into the memory 104. Alternatively, in some cases, the host may create a customised spatial layout. This may be done using a spatial layout builder tool, which allows the host to drag and drop shapes onto the map of the spatial layout. The customised spatial layout is then loaded into the memory 104.

In step 412, the processor 106 of the server 210 obtains an allocation definition, defining an assignment of each participant to a respective spatial position. As will be explained in further detail below, the allocation of participants to spatial positions may be assigned by the server 210, or may be selected to a greater or lesser extent by the participants.

In step 420, the processor 106 of the server 210 determines, for each of the participants in the videoconference, a group of neighbouring participants. In the present example, the server does this by calculating the mutual proximity of participants according to their assigned spatial positions in the spatial layout. In particular, a distance metric is defined in the spatial layout, and any other participants whose spatial positions are less than a predetermined threshold distance from a given participant are included in the group of neighbouring participants of that given participant. In the present example, a 2-D Euclidean distance is used.

Participants are able to interact with one another in a position-dependent manner. In particular, participants are able to communicate with one another locally in the spatial layout, on condition that the distance between their spatial positions is less than or equal to the predetermined threshold distance. This can provide a way to limit or filter the noise of multiple participants speaking concurrently. It can also provide a better way to emulate a real physical meeting, by supporting a richer set of social interactions. The local communication between participants can mimic the ability to whisper or speak quietly to one's neighbours in the setting of a real meeting.

The result of the calculation in step 420 is a set of groups - one group per participant. Each group is defined by a list of the participants who are members of the group. The members include the participant at the "centre" of the group (that is, the participant for whom the group is defined) and their neighbouring participants. When group membership is defined based on a distance threshold, as explained above, bidirectional communication will be possible between the participant at the "centre" of the group and each other member of the group. In other words, if Participant B is in the group of neighbours of Participant A, then Participant A will likewise be in the group of neighbours of Participant B. Local communication from Participant A will be received by Participant B; and local communication from Participant B will. be received by Participant A. The groups of neighbouring participants will be overlapping but not identical. For example, Participant C may be in the group of neighbours of Participant A but might not be in the group of neighbours of Participant B (even though B is a neighbour of A). Again, this can allow the videoconferencing system to mimic real-world interactions more realistically. As explained in greater detail below, in some examples, local communications between participants may be processed (for example, using digital filtering) based on the relative spatial positions of the participants and/or the distance between them. For example, the amplitude and/or phase of audio signals in an audio stream may be modified to give the listener the impression of distance and/or direction.

In step 426, for each calculated group, the server 210 sends a definition of the group to the terminal device at the centre of the group. This enables each participant to know who will receive their local communications. The group definitions are sent by the server 210 to the terminal devices over the internet 201.

In step 526 (see Fig. 4B), each terminal device receives the definition of its group of neighbours. In step 534, a participant using one of the terminal devices (for instance, the first terminal device 222) decides to communicate locally with his/her neighbours. The participant may press a "Whisper" button on the user interface, for example. The terminal device 222 transmits to the server 210 a request to initiate local communication. In step 532, the terminal device 222 transmits a media stream for local communication, for delivery to its group of neighbours. In the present example, the media stream comprises an audio stream, allowing the participant initiating local communication to "whisper" to his/her neighbours.

In step 432, the server 210 receives the media stream transmitted by the terminal device 222 in step 532. In step 434, the server 210 receives the request for local communication, which was transmitted by the terminal device 222 in step 534. Step 432 and 434 may occur in any order, or substantially simultaneously. Typically, they occur close together in time. For example, the terminal device 222 may begin transmitting the media stream for local communication (step 532) immediately after transmitting the request to initiate local communication (step 534).

In step 436, the server 210 communicates the media stream to the terminal devices in the group of neighbours of the first terminal device 222. In the present example, a selective forwarding unit (SFU) architecture is adopted. Therefore, the server 210 forwards the media stream to the group of neighbouring participants. In step 510, each terminal device in the group of neighbours of the first terminal device 222 receives the forwarded local communication media stream. By way of example, we will assume that the second terminal device 224 is one of the neighbours of the first terminal device (as defined by their proximity in the spatial layout). Accordingly, the second terminal device 224 receives the media stream in step 510 and presents the media stream to its associated participant in step 520. In this example, presenting the media stream comprises playing the audio stream to the participant, over the loudspeaker 113 of the second terminal device 224.

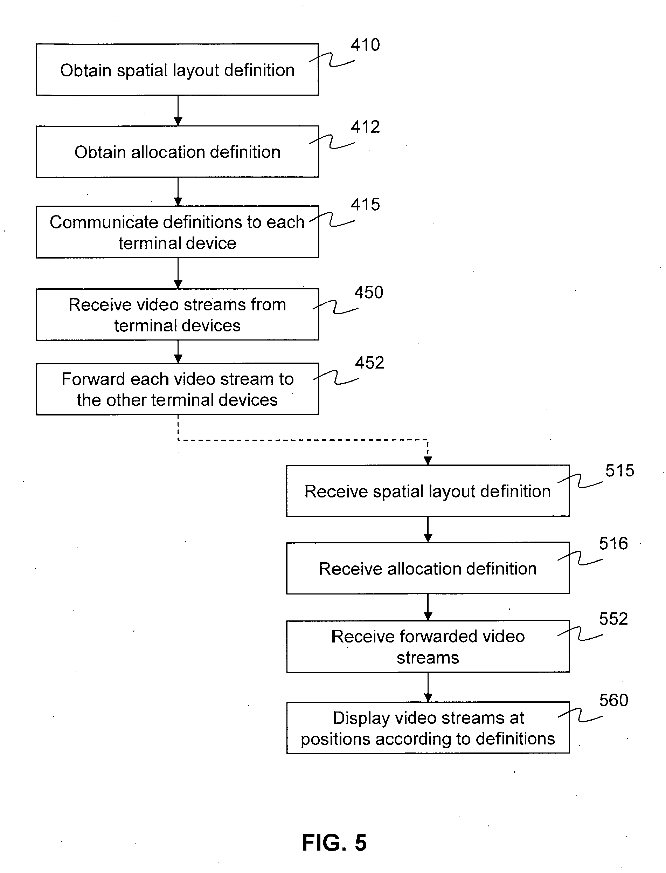

Fig. 5 is a flowchart showing further features of the videoconferencing method according to the present example. Fig. 5 relates to the use of the spatial layout to display video streams.

Steps 410 and 412 are the same as described above. In these steps, the server 210 obtains the definition of the spatial layout and obtains the allocation definition, assigning participants to spatial positions. In step 415, the server 210 communicates the spatial layout definition and the allocation definition to each terminal device 222, 224, 226. These are received by the terminal devices in steps 515 and 516, respectively.

In step 450, the server 210 receives video streams from the respective terminal devices 222, 224, 226. In step 452, the server 210 communicates each video stream to every other terminal device (that is, to every terminal device other than the terminal device from which it originated). In the present example, the server does this by selectively forwarding the streams in the appropriate way.

In step 552, each terminal device 222, 224, 226 receives all of the video streams forwarded by the server in step 452. Each terminal device 222, 224, 226 displays each video stream (step 560) at the correct spatial position in the spatial layout, according to the spatial layout definition and allocation definition received in steps 515 and 516. In this way, each terminal device 222, 224, 226 reconstructs the spatial layout (for example, as illustrated in Fig. 3A or 3B) by displaying the video of each participant at that participant's assigned spatial position in the spatial layout. Each participant therefore sees every other participant (and sees themselves) at the same set of positions in the spatial layout.

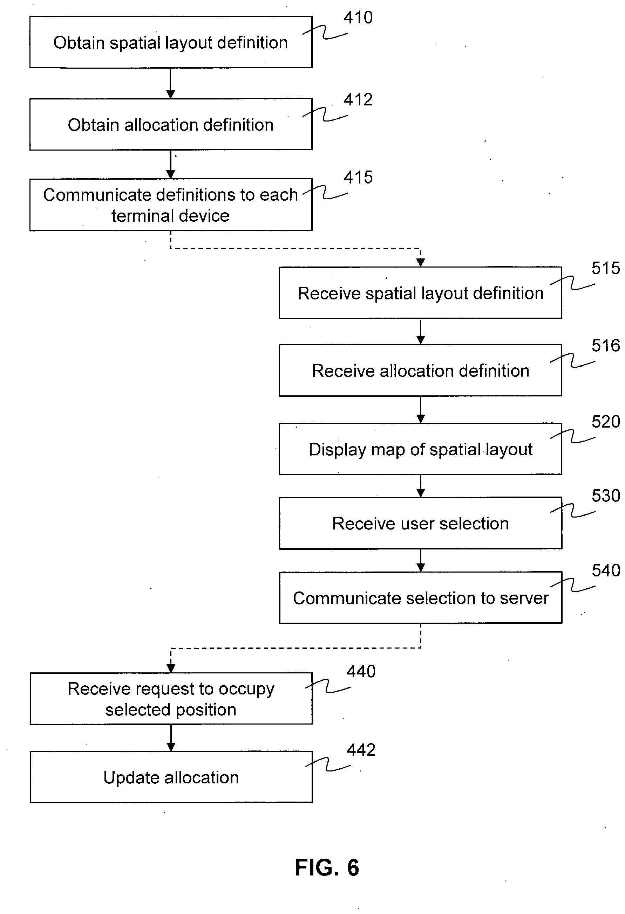

Fig. 6 is a flowchart showing further features of the videoconferencing method according to the present example. Fig. 6 relates to the ability of participants to select their own positions in the spatial layout.

Steps 410, 412, 415, 515, 516 are the same as in Fig. 5. In step 520, a terminal device - for example, the third terminal device 226 - displays a map of the spatial layout to its associated participant. (This participant will be referred to as the "third" participant, for convenience.) This may be a map of "empty seats" as exemplified in Figs. 3A and 3B. Alternatively, spatial positions-that have already been assigned to other participants may be "filled in" with the video streams of those participants.

In step 530, the third participant selects one of the unassigned spatial positions in the spatial layout, and the terminal device 226 receives the third participant's selection via one of the input devices - for example, via a touchscreen, mouse or other pointing device. In step 540, the terminal device 226 communicates the third participant's selection to the server 210, as a request to occupy the selected spatial position.

In step 440, the server 210 receives the request. In response, in step 442, the server updates the allocation definition to assign the third participant to their requested spatial position in the spatial layout. In this way, the participants can select their positions in the spatial layout. The server maintains control of the allocation definition and can mediate between participants who request the same spatial position at the same time. For example, the participant whose request arrives first may be assigned the spatial position. Alternatively, the server may give precedence to certain participants when assigning spatial positions - for example, precedence may be given to the host of the videoconference.

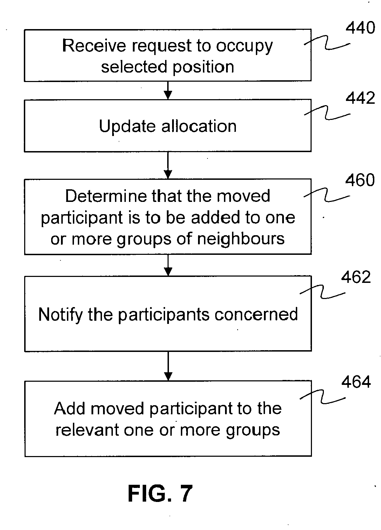

Fig. 7 illustrates an extension of the method of Fig. 6. Steps 440 and 442 shown in Fig. 7 are the same steps shown at the end of the method of Fig. 6. For the purposes of Fig. 7, it is assumed that the participant associated with the third terminal device 226 has moved to a new position in the spatial layout.
In step 460, the processor of the server 210 determines that the third participant (who is associated with the third terminal device 226) now qualifies to be in the group of neighbouring participants of the first participant (who is associated with the first terminal device 222). The processor makes this determination based on the distance between the spatial position of the first participant and the updated spatial position of the third participant, in the spatial layout. This means that the third participant will now receive any local communications sent by the first participant. In step 462, the server 210 notifies the first participant of this fact (by communication with the first terminal device). Similar notifications are sent to any other participants whose groups the third participant has joined. Having notified the first participant (and any other participants affected), the processor adds the third participant to the relevant groups of neighbouring participants, in step 464.

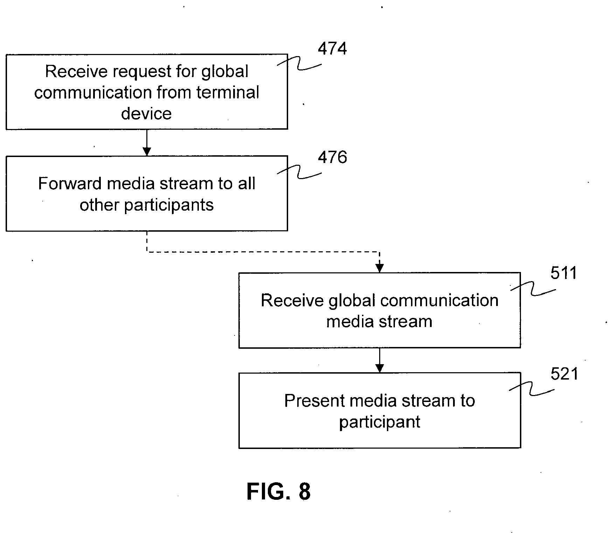

Fig. 8 is a flowchart showing further features of the videoconferencing method according to the present example. Fig. 8 relates to global communication from one participant to all the other participants.

In step 474, the server 210 receives a request from the first terminal device 222 to initiate global communication. This means that the first participant wishes to transmit a media stream to all of the other participants. In the present example, it is assumed that the first participant wishes to communicate via global communication the same media stream that was previously communicated via local communication. (This is the media stream that was transmitted by the first terminal device 222 in step 532 of Fig. 4B.) In other words, the first participant wishes to switch from communicating locally with their neighbours to communicating globally with all participants. In response to the receipt of this request, the server 210 communicates the media stream to all, of the other terminal devices 224, 226 (and therefore participants) in the videoconference. In particular, in this example using the SFU architecture, the server 210 forwards the media stream to each of the other terminal devices 224, 226.

In step 511, each other terminal device 224, 226 receives the global communication media stream from the server 210. And in step 521, each terminal device 224, 226 presents the media stream to the respective participant.

The technical features described above support a functionality whereby participants can control whether to communicate locally with their neighbouring participants, or globally with all participants. For example, a user interface at the terminal device 222, 224, 226 may comprise two buttons - a first button labelled "speak to all" or "broadcast", which the participant presses to select global communication, and a second button labelled "speak to neighbours" or "whisper", which the participant presses to select local communication.

In the example above, the video streams were essentially transmitted as global communication (with the video stream of each participant being communicated to all participants) - see step 452 in Fig. 5. A "whisper" audio stream was transmitted as local communication (only to participants in the group of neighbours). However, other configurations are possible. The media stream for local communication may comprise or consist of a video stream, a text stream, or other communications, such as a voice note (or other audio clip), a file or document, in particular a media file, or a visual or audio notification, as summarised previously, above. Video streams need not be transmitted to all participants as global communication (unless a participant selects that mode, specifically).

It should be understood that global and local communications may be transmitted simultaneously to the terminal devices. For example, global communications from one or more participants may be combined with local communications from one or more participants. These may be the same or different participants. Audio streams may be combined by audio mixing. The mixing may emphasise either the global communication or the local communication. That is, an audio stream for local communication may be amplified or attenuated relative to an audio stream for global communication. Amplifying the audio stream for local communication may help to emulate and enhance a sense of spatial awareness. In the real world, voices that are closer sound louder; emphasising an audio stream for local communication can help to replicate this effect.

The effect may be further enhanced by processing audio streams for local communication based on the distance between the sending and receiving participants. An audio stream from a relatively more distant participant may be processed so that it is played back at a relatively lower volume, while an audio stream from a relatively nearer participant may be processed so that it is played back at a relatively higher volume. In some examples, the direction as well as the distance may be taken into account in the processing. For example, using stereo loudspeakers or stereo headphones, an audio stream may be processed to give the impression of a specific direction of arrival. This can be done by controlling the phase and/or amplitude of the left and right stereo audio channels to simulate the arrival of sound from a particular direction in free space.

In the description above, the example of an SFU architecture was used. However, it should be understood that the scope of the present disclosure is not limited to this architecture. In another example, the videoconferencing system may implement a multipoint conferencing unit (MCU) at the server 210. An SFU selectively forwards individual video streams (and optionally other media streams) from each terminal device to the other terminal devices, typically without decoding the streams. In contrast, an MCU decodes each video stream, rescales it as necessary, and forms a composite stream, which it then encodes and transmits to the terminal devices. For the terminal devices, the principal difference is the number of streams received. With an SFU architecture, the terminal device may receive as many video streams as there are other participants in the videoconference. The terminal device needs to decode each of these video streams in order to display it. With an MCU architecture, the terminal device typically receives a single composite video stream assembled by the MCU. Therefore, the terminal device needs only to decode a single video stream.

The SFU architecture may be more efficient for some examples according to the present disclosure. Because of the use of local communication, different combinations of media streams may need to be sent to different terminal devices. When implementing this using an MCU architecture, the MCU might need to generate a different composite stream for each terminal device, reflecting the fact that each terminal device may receive local communications from a unique group of neighbouring participants. The SFU architecture may be naturally better suited to these needs. Instead of needing to construct a composite stream for every terminal device at the server 210, the SFU can simply forward media streams for local communication individually to the appropriate destination terminal devices.

The use of the SFU architecture can also offer further flexibility in the implementation of the presently described methods. In the examples described above, the server 210 forwarded media streams for local communication only to the appropriate groups of neighbouring participants. In other words, media streams for local communication were selectively forwarded by the server 210 according to the group definitions. An alternative would be for the server 210 to forward media streams for local communication non-selectively. That is, the server 210 would forward each media stream for local communication to every other terminal device (that is, every terminal device other than the terminal device from which it originated). Essentially, the server 210 would treat global and local communication equivalently. The necessary filtering would be done at the terminal devices receiving the media streams.

The benefits of the SFU architecture may diminish for videoconferences with large numbers of participants. In the SFU architecture, the number of separate streams being forwarded to each terminal device increases with the number of participants. The processing burden on the terminal device increases accordingly. Consequently, the MCU architecture may outperform the SFU architecture for largescale videoconferences.

In some examples, the server may implement a hybrid of the MCU approach and the SFU approach. For example, the server (acting as an MCU) may decode and mix together several audio streams for global communication, to generate a composite stream. The server would encode this composite stream and transmit it to the terminal devices. At the same time, the server (acting as an SFU) may forward one or more audio streams for local communication to the terminal devices in the relevant recipient groups for those local communications. This hybrid approach can avoid the need for the server to decode and re-encode many streams (or sets of streams) for local communication. Meanwhile, it can avoid the need for each terminal device to receive and decode several separate streams for global communication.

Suitable methods for encoding and decoding audio and video streams for videoconferencing are known in the art. Video codecs include but are not limited to H.264, H.265, VC-1, RTV, and VP8/9. Audio codecs include but are not limited to: G.711, G.722, G.728, Siren Audio and AAC.

Those skilled in the art will be aware that software libraries for building videoconferencing applications are available. Web Real-Time Communication (WebRTC) is an open-source project, which provides standards for media capture devices and peer-to-peer connectivity. It offers APIs that can be used to build real-time communication capabilities into any software application. Extensible Messaging and Presence Protocol (XMPP) defines a communication protocol suitable for instant messaging (IM) and other real-time or near real-time exchange of structured data between computer systems. Jitsi (jitsi.org) is open-source software that builds upon XMPP and WebRTC. Based on the foregoing description, it will be apparent to those skilled in the art how these and/or other software tools may be used to implement examples according to the present disclosure.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore in the appended claims lists comprising "at least one of: A; B; and C" should be interpreted as (A and/or B) and/or C.

Furthermore in general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD. In some embodiments, the software may be installed locally on each of the terminal devices 222, 224, 226 and/or on the server 210. In some embodiments, the software may be hosted in the cloud and provided using a software-as-a-service (SaaS) model. SaaS software applications may be accessed via a web browser, for example.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples. The data processors may be processors of a desktop computer, a personal computer, a laptop, a tablet, mobile device such as a smart phone, a virtual reality headset, a server, a mainframe computer, and so on.

Embodiments as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

## Claims

1. A computer-implemented method for conducting a videoconference among a plurality of participants, each participant being associated with a respective terminal device, the method comprising:
obtaining (410) a spatial layout definition, defining a set of spatial positions;
obtaining (412) an allocation definition, defining an assignment of each participant to a respective spatial position;
determining (420), for a first participant in the plurality of participants, a first group of neighbouring participants, based on distances between the first participant and other participants, wherein the distances are defined with reference to the spatial positions to which the participants are assigned;
receiving (432) a first media stream from a first terminal device associated with the first participant;
receiving (434), from the first terminal device, a request to initiate local communication;
and
communicating (436) the first media stream to the terminal devices associated with the participants in the first group.

2. The method of claim 1, further comprising:
determining (420), for a second participant in the plurality of participants, a second group of neighbouring participants, based on the distances between the second participant and other participants;
receiving (432) a second media stream from a second terminal device associated with the second participant;
receiving (434), from the second terminal device, a request to initiate local communication; and
communicating (436) the first media stream to the terminal devices associated with the participants in the second group,
wherein the first group and the second group overlap but are not identical.

3. The method of claim 1 or claim 2, further comprising communicating (415) the spatial layout definition and the allocation definition to each terminal device.

4. The method of any one of the preceding claims, further comprising controlling each terminal device to display (560) video streams of the other participants on screen at spatial positions determined by the spatial layout definition.

5. The method of any one of the preceding claims, further comprising:
receiving (474), from the first terminal device, a request to initiate global communication; and
in response, communicating (476) the first media stream to all of the other terminal devices.

6. The method of any one of the preceding claims,
wherein communicating the first media stream to the terminal devices associated with the participants in the first group comprises forwarding the first media stream to those terminal devices,
wherein the method further comprises:
receiving from one or more of the terminal devices one or more respective media streams for global communication;
decoding the one or more media streams;
combining the decoded one or more media streams into a composite media stream for global communication; and
communicating the composite media stream to all of the terminal devices.

7. The method of any one of the preceding claims, wherein the first media stream and/or the second media stream comprises any one or any combination of two or more of:
an audio stream;
a video stream;
a text stream;
a voice note or other audio clip;
a file or document, in particular a media file;
a visual notification; and
an audio notification.

8. The method of any one of the preceding claims, further comprising:
receiving (440), from a third terminal device, a request for a third participant associated with the third terminal device to occupy one of the spatial positions; and
updating (442) the allocation definition to assign the third participant to the requested spatial position.

9. The method of claim 8, further comprising:
determining (460) that the third participant is to be added to the first group, based on the distance between the first participant and the third participant; and
notifying (462) at least the first participant that the third participant is to be added to the first group.

10. A computer-implemented method for conducting a videoconference among a plurality of participants, each participant being associated with a respective terminal device, the method comprising:
obtaining (515) a spatial layout definition, defining a set of spatial positions;
obtaining (516) an allocation definition, defining an assignment of several of the participants to respective spatial positions;
displaying (520) on a display screen a map of the spatial layout, indicating spatial positions that are already assigned and spatial positions that are unassigned;
receiving (530) user input selecting one of the unassigned spatial positions; and
communicating (540) the selected spatial position to a server computer.

11. The method of claim 10, further comprising:
receiving (526) a definition of a group of neighbouring participants;
transmitting (534) to the server computer a request to initiate local communication with the group; and
transmitting (532) a media stream to the server computer, for delivery to the group.

12. The method of claim 10 or claim 11, further comprising:
receiving (552) a video stream of each participant; and
displaying (560) the video streams on the display screen,
wherein each participant's video stream is displayed at their respective assigned spatial position.

13. The method of claim 12, wherein each participant's video stream is displayed in a circular or approximately circular shape.

14. The method of any one of the preceding claims, wherein the spatial positions are arranged in one of:
a spiral arrangement (300); and
an arrangement of concentric rings (310).

15. The method of claim 14, wherein the spatial positions are arranged in a spiral arrangement, the method further comprising:
adding an additional spatial position at the end of the spiral (300) when a new participant joins videoconference; and/or
removing a spatial position from the end of the spiral (300) when a participant leaves the videoconference.
